# EUROPEAN PATENT APPLICATION

(11) **EP 1 114 749 A2**
(43) Date of publication of application: **11.07.2001**
(21) Application number: 01100448.8
(22) Date of filing: 08.01.2001
(51) Int. Cl.: B60Q 9/00, B60Q 1/52

(54) **An apparatus and method for reminding a driver of a vehicle to drive on the correct side of the road**

(30) Priority: 07.01.2000 GB 0000238
(71) Applicant: Marshall, David Charles, Godalming, Surrey GU7 1BT (GB)
(72) Inventor: Marshall, David Charles, Godalming, Surrey GU7 1BT (GB)
(74) Representative: Lucas, Brian Ronald

(57) **Abstract**

An apparatus for reminding a driver of a vehicle to drive on the correct side of a road, said apparatus comprising a base unit (1) and a trigger unit (2), said base unit (1) comprising reminding means (21,23), the arrangement being such that, in use, one of said base unit (1) and said trigger unit (2) is arranged on a stationary component (29) of a vehicle, such as a steering column, and the other of said base unit (1) and said trigger unit (2) is arranged on a steering wheel (30), rotation of said steering wheel (30) by a predetermined amount activating said reminding means (21,23).

A vehicle provided with the apparatus in accordance with the present invention.

A method for reminding a driver of a vehicle to drive on the correct side of a road, said method comprising the step of rotating a steering wheel of a motor vehicle by a predetermined amount from centred whereupon an reminding means is triggered.

## Description

This invention relates to an apparatus and method for reminding a driver of a vehicle to drive on the correct side of a road and to a vehicle provided with the apparatus.

Each year a number of accidents occur when visitors accustomed to driving on the right hand side of the road revert to their national practice on British roads. Similar problems arise when the British attempt driving on the left hand side of French and German roads.

I have observed that most mistakes occur at junctions. In particular, a driver may approach the junction on the correct side of the road, move to the centre of the junction and exit on his accustomed (wrong) side of the road. The present invention is based on the concept of reminding a driver to drive on the correct side of the road, preferably as he or she exits the junction. The probable presence of a junction can conveniently be identified by the position of the steering wheel since, on most roads the steering wheel rarely moves more than 45° from centre and usually appreciably less.

According to the present invention there is provided an apparatus for reminding a driver of a vehicle to drive on the correct side of a road, said apparatus comprising a base unit and a trigger unit, said base unit comprising reminding means, the arrangement being such that, in use, one of said base unit and said trigger unit is arranged on a stationary component of a vehicle, such as a steering column, and the other of said base unit and said trigger unit is arranged on a steering wheel (or rotary part thereof), rotation of said steering wheel by a predetermined amount activating said reminding means.

Preferably, said reminding means comprises a speaker for providing an audible reminding signal.

Additionally, said reminding means may comprise a chip which has programmed therein a synthesised voice signal for output through said speaker.

Preferably, said reminding means comprises a visual reminding device.

Advantageously, said visual reminding device comprises an LED.

Preferably, said visual reminding device comprises at least one back light letter.

Advantageously, said base unit comprises a housing.

Preferably, said apparatus comprises a switch arranged externally of said housing.

Advantageously, said switch is a reed switch and preferably, said trigger unit comprises a magnet.

Preferably, said apparatus comprises a power supply.

Advantageously, said base unit and/or said trigger unit is attachable to said stationary component by a hook and loop fastener.

The present invention also provides a vehicle provided with the apparatus in accordance with the present invention.

Advantageously, said vehicle is provided with two trigger units arranged on a steering wheel.

Preferably, said two trigger units are arranged at equal angles about the bottom of a centred steering wheel taken from a hub of the steering wheel.

The present invention also provides a method for reminding a driver of a vehicle to drive on the correct side of a road, said method comprising the step of rotating a steering wheel of a motor vehicle by a predetermined amount from centred whereupon reminding means is triggered.

Preferably, said predetermined amount is at least 90° from centred.

Advantageously, said predetermined amount is at least 120° from centred.

Preferably, said predetermined amount is at least 180° from centred.

For a better understanding of the present invention, reference will now be made, by way of example, to the accompanying drawings, in which:
Figure 1 is an exploded perspective view of an apparatus in accordance with the present invention;
Figure 2 is a circuit diagram showing the arrangement of electrical components used in the apparatus of Figure 1;
Figure 3 is a part of a vehicle provided with the apparatus of Figure 1; and
Figure 4 is a perspective view of the apparatus of Figure 1 with a dash-dot line indicating the path of travel of a part of the apparatus in use.

Referring to the drawings, there is shown an apparatus for reminding a driver to drive on the correct side of a road. The apparatus comprises a base unit 1 and a trigger unit 2.

The base unit 1 comprises a rigid plastics moulded housing 3 having a floor 4 and raised sides 5 which enclose a circuit board 6. A mounting post 7 is integral with and extends from the floor 4 through a substantially centrally located hole 8 in the circuit board 6. Four ribs (not shown) which are arranged at right angles to each other extend along the mounting post 7. The ribs inhibit movement of the circuit board within the housing 3.

A mounting plate 9 is bolted to an underside of the floor 4. The mounting plate 9 comprises two wing portions 10 and (not shown) which have flat portions substantially parallel to the floor 4 and spaced therefrom by approximately 0.5 cm. The undersides of the wing portions have loop strips of hook and loop fasteners, such as VELCRO, adhered to them.

The housing 3 has a corresponding cover plate 11 which has a lower portion 12 having an inclined top surface 13 which reaches a pinnacle approximately two-thirds the way along the cover plate 11, which meets a top surface 14 of an upper portion 15. Sides 16 extend from the top surfaces 13, 14. A recessed receptor 17 is moulded integrally with the cover plate 11 in an upper part of the lower portion. A screw (not shown) is located in the recessed receptor 17 and extends into the receptor 8 to retain the cover plate 11 on the housing 3. Five holes 18 are formed in the top surface 14 of the upper portion 15 to allow sound to pass therethrough. The rear side of the top surface 14 of the upper portion 15 is covered in an acoustically transparent material 19 thereby visually obscuring the seven holes 18.

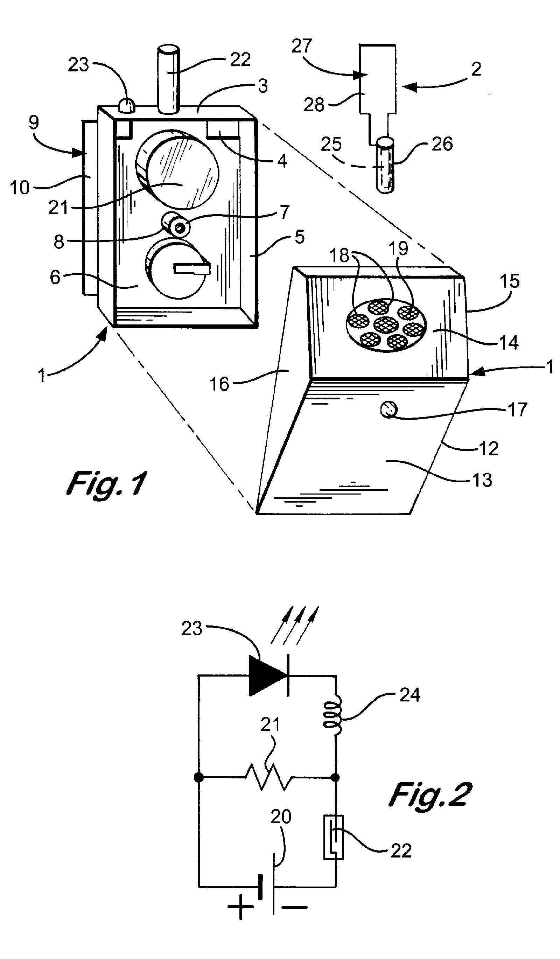

The circuit diagram of Figure 2 shows a lithium three volt battery 20 having a positive terminal connected in series with a speaker 21 (such as a piezo sounder, shown as a resistive load) connected to a reed switch 22 before returning to a negative terminal of the battery 20. A high-brightness LED 23 and an inductive coil 24 are arranged in parallel with the speaker 21.

The reed switch 22 projects through a hole in one side 5 of the housing 3. The LED 23 also projects through a hole in the one side 5.

The trigger unit 2 comprises a magnet 25 mounted in a transparent cylindrical housing 26 which is attached to an L-shaped plate 27. The plate 27 has an enlarged portion 28, the underside (not shown) of which has a loop strip of hook and loop fastners, such as VELCRO, adhered to it.

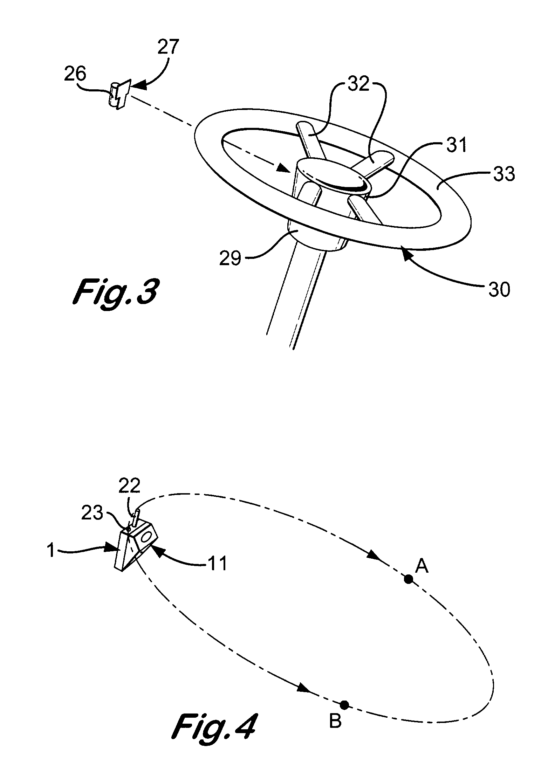

In use, as shown in Figure 3, the base unit 2 is secured to a top surface of steering column 29 by way of a hooked strip of a hook and loop fastner adhered thereto, with reed switch 22 projecting towards a steering wheel 30.

The trigger unit 2 is secured to the perimeter of a bottom surface of cylindrical hub 31 of the steering wheel 30 by way of a hooked strip of a hook and loop fastener adhered thereto. The magnet 25 projects beyond the hub 31 such that when the steering wheel is turned relative to the steering column by 180°, the magnet 25 of the trigger unit 2 passes close to the reed switch 22, closing the electric circuit, activating an audible alarm signal through speaker 21, and activating a visual signal via LED 23.

The audible alarm signal and visual signal reminds the driver of a vehicle that he should be driving on a particular side of the road when turning the steering wheel to an extent equal to that of an average junction.

Various modifications and/or improvements are envisaged to the above embodiment. In particular, the trigger unit could be mounted on a spoke 32 or rim 33 of the steering wheel 30.

Two trigger units 2 could be arranged at points A and B on a swept circle of the steering wheel 30. Points A and B could be at any angle from the from the base unit 1 such as 120°, thus when the wheel is turned 120° from the natural position, the alarm signal will be activated. This is a preferred aspect, as cars of different types have a differing number of turns lock to lock.

The base unit could be made integral with the steering column and the trigger unit made integral with the steering wheel.

The audible signal could be a synthesised voice relaying a message such as "remember to drive on the left side of the road". The visual signal could light up an "R" on a dashboard of a vehicle for reminding a driver to drive on the right hand side of the road.

The apparatus may be provided with an overide power switch.

The apparatus may be powered from a vehicles battery. The electrical components could be chosen to be used with a 12V supply, or remain at 3V and use a device such as a DC-DC converter.

## Claims

1. An apparatus for reminding a driver of a vehicle to drive on the correct side of a road, said apparatus comprising a base unit (1) and a trigger unit (2), said base unit (1) comprising reminding means (21,23), the arrangement being such that, in use, one of said base unit (1) and said trigger unit (2) is arranged on a stationary component (29) of a vehicle, such as a steering column, and the other of said base unit (1) and said trigger unit (2) is arranged on a steering wheel (30), rotation of said steering wheel (30) by a predetermined amount activating said reminding means (21,23).

2. An apparatus as claimed in Claim 1, wherein said reminding means (21,23) comprises a speaker (21) for providing an audible reminding signal, preferably said reminding means comprises a chip which has programmed therein a synthesised voice signal for output through said speaker (21).

3. An apparatus as claimed in Claim 1 or 2, wherein said reminding means comprises a visual reminding device (23), preferably comprising an LED (23), and preferably said visual reminding device comprises at least one back lit letter.

4. An apparatus as claimed in any preceding claim, wherein said base unit (2) comprises a housing (3).

5. An apparatus as claimed in Claim 5, wherein said switch (22) is arranged externally of said housing (3).

6. An apparatus as claimed in any preceding claim, wherein said trigger unit is a reed switch (22).

7. An apparatus as claimed in any preceding claim, wherein said trigger unit comprises a magnet and preferably comprises a power supply (20).

8. An apparatus as claimed in any preceding claim, wherein said base unit (1) and/or said trigger unit (2) is attachable to said stationary component, such as a steering column (29) by a hook and loop fastener.

9. A vehicle provided with an apparatus as claimed in any preceding claim, preferably including two trigger units (2) arranged on a steering wheel (29), advantageously, said two trigger units (2) are arranged at equal angles about the bottom of a centred steering wheel (29) taken from a hub (31) of the steering wheel (29).

10. A method for reminding a driver of a vehicle to drive on the correct side of a road, said method comprising the step of rotating a steering wheel of a motor vehicle by a predetermined amount from centred whereupon an reminding means is triggered, advantageously, said predetermined amount is at least 90° from centred, preferably or alternatively at least 120° from centred or at least 180° from centred.
